# EUROPÄISCHE PATENTSCHRIFT

(11) **EP 2 055 981 B1**
(45) Veröffentlichungstag und Bekanntmachung des Hinweises auf die Patenterteilung: **05.03.2014**
(21) Anmeldenummer: 08018540.8
(22) Anmeldetag: 23.10.2008
(51) Int. Cl.: F16D 65/56

(54) **Fahrzeugbremse**
Vehicle brake
Frein de véhicule

(30) Priorität: 25.10.2007 DE 102007051152; 20.06.2008 DE 102008029314
(43) Veröffentlichungstag der Anmeldung: 06.05.2009
(73) Patentinhaber: KNORR-BREMSE Systeme für Nutzfahrzeuge GmbH, 80809 München (DE)
(72) Erfinder: Iraschko, Johann, 85301 Schweitenkirchen (DE); Kempinger, Georg, 81827 München (DE); Camilo-Martinez, José, 82008 Unterhaching (DE)
(74) Vertreter: Mattusch, Gundula

(56) Entgegenhaltungen:
- DE-A1- 19 632 917
- DE-A1-102004 037 771
- US-A- 4 491 203

## Beschreibung

Die Erfindung betrifft eine Fahrzeugbremse, insbesondere eine Scheiben- oder Trommelbremse, mit an Bremsbelagträgern festgelegten Bremsbelägen, mit einer den Verschleiß der Bremsbeläge kompensierenden Nachstelleinrichtung, die mit einer beim Überschreiten eines zulässigen Drehmomentes ansprechenden Rutschkupplung ausgestattet ist.

Eine derartige Bremse ist aus der EP 0 566 008 A1 oder auch aus der DE-A-196 32917 bzw. US 4 491 203 A bekannt.

Die in Rede stehende Fahrzeugbremse ist besonders für Nutzfahrzeuge ausgelegt. Besonders bei diesen Fahrzeugen werden die Bremsbeläge aufgrund der hohen abzubremsenden Massen stark belastet. Der Verschleiß der Bremsbeläge ist demzufolge entsprechend hoch.

Beim Wechseln der Bremsbeläge kann es aufgrund der Auslegung der Nachstelleinrichtung zum Überschreiten eines zulässigen Drehmomentes der inneren Mechanik kommen. Dieses Drehmoment wird über die manuelle Rückstelleinrichtung eingeleitet. Wird dabei ein bestimmtes Drehmoment überschritten, spricht die Rutschkupplung an. Diese könnte auch als Sicherheits- oder Überlastkupplung bezeichnet werden. Bei der in Rede stehenden Fahrzeugbremse hat sie die Aufgabe, die Bauteile der Nachstelleinrichtung gegen Beschädigung oder gegen Zerstörung zu sichern.

Rutschkupplungen sind allgemein bekannt. Von der Funktion her unterscheidet man Reibkupplungen mit einer konstanten Anpresskraft, die jedoch auch einstellbar sein kann. Gemäß einer anderen Bauform werden auch sogenannte Lamellenkupplungen verwendet. Die Lamellen bestehen entweder aus Stahl, wobei sie jedoch auch mit Reibbelägen versehen sein können. Die Anpresskraft wird durch geeignete Federn erzeugt.

Der vorliegenden Erfindung liegt die Aufgabe zugrunde, eine Fahrzeugbremse der eingangs näher beschriebenen Art so zu gestalten, dass die Rutschkupplung in kostengünstiger Weise aus einer minimalen Anzahl von Bauteilen gebildet ist, und dass es beim Überschreiten des zulässigen Drehmomentes zu keiner Beschädigung oder Zerstörung von Bauteilen der Rutschkupplung oder der Nachstelleinrichtung kommt.

Die gestellte Aufgabe wird gemäß einer ersten Ausführung nach Anspruch 1 gelöst, u.a. indem die Rutschkupplung aus einer Außenhülse und einer Innenhülse gebildet ist, und dass die Außenfläche der Innenhülse und die Innenfläche der Außenhülse durch Profilierungen formschlüssig miteinander verbunden sind.

Diese formschlüssige Verbindung bezieht sich auf den Zustand, bei dem das zulässige Drehmoment nicht überschritten wird. Wird jedoch dieses zulässige Drehmoment überschritten, wird diese formschlüssige Verbindung überwunden, so dass sich zumindest eine der beiden Hülsen gegenüber der anderen Hülse verdreht. Die aus der Außen- und der Innenhülse gebildete Kupplung besteht nur aus zwei Bauteilen, so dass sie äußerst kostengünstig hergestellt werden kann.

Ein weiterer Bestandteil der Lösung der Aufgabe besteht darin, dass die Außenhülse bei Überschreiten des zulässigen Drehmomentes elastisch verformbar ist. Durch diese elastische Verformbarkeit der Außenhülse, ist sichergestellt, dass die ursprüngliche Form der Außenhülse und gegebenenfalls auch der Innenhülse wiederhergestellt wird. Die elastisch verformbare Außenhülse und gegebenenfalls auch die Innenhülse sind aus einem geeigneten Werkstoff gefertigt. Dies ist ein geeigneter Stahl.

Die Profilierungen der Außenhülse und der Innenhülse sind so ausgelegt, dass bis zum Erreichen des zulässigen Drehmomentes keine Verdrehung einer Hülse relativ gegenüber der anderen Hülse erfolgt, d.h., die formschlüssige Verbindung zwischen der Außenhülse und der Innenhülse bleibt erhalten. Beim Überschreiten des zulässigen Drehmomentes wird jedoch die elastische Verformbarkeit der Außenhülse zum Durchrutschen genutzt.

Die elastische Verformung der Außenhülse wird begünstigt, wenn deren Profilierungen segmentartig gestaltet sind und formschlüssig ineinander greifen. Die segmentartige Profilierung erstreckt sich über einen bestimmten Winkelbereich, wodurch die elastische Verformung des wenigstens einen Bauteiles begünstigt wird. In bevorzugter Ausführung ist noch vorgesehen, dass die Innenhülse mit erhabenen, nach außen verspringenden segmentartigen Profilierungen und die Außenhülse mit komplementären segmentartigen Einziehungen versehen ist. Dadurch wird beim Überschreiten des zulässigen Drehmomentes zumindest die Außenhülse stärker verformt als die Innenhülse. Bei einer entsprechenden Auslegung der segmentartigen Profilierungen wird sich ausschließlich die Außenhülse elastisch verformen.

Die Verformung der Außenhülse wird noch begünstigt, wenn diese mit einer der Anzahl der segmentartigen Einziehungen erstreckenden Anzahl von Längsnuten versehen ist. In einer weiterhin noch bevorzugten Ausführung ist vorgesehen, dass die Innenhülse mit zwei einander diametral gegenüberliegenden segmentartig gestalteten und nach außen verspringenden Profilierungen versehen ist, und dass die Außenhülse mit zwei komplementär sowie segmentartig gestalteten Einziehungen versehen ist, die sich ebenfalls einander diametral gegenüberliegen, und dass die Längsnuten der Außenhülse in gleichen Winkelabständen zu den segmentartigen Einziehungen liegen.

Eine kompakte Bauform der Rutschkupplung wird nach der Erfindung nach Anspruch 1 erreicht, wenn die Außenhülse stufenförmig abgesetzt ist, und dass sich die Innenhülse über den Bereich oder annähernd über den Bereich mit dem größeren Durchmesser der Außenhülse erstreckt. Wenn ausschließlich die Außenhülse mit dem größeren Durchmesser elastisch verformt wird, ist vorgesehen, dass sich die Längsnuten der Außenhülse nur über den Bereich oder annähernd über den Bereich mit dem größeren Durchmesser erstrecken.

Zur Verbindung mit den inneren Bauteilen der Nachstelleinrichtung ist außerdem noch vorgesehen, dass die Innenfläche der Innenhülse profiliert ist, vorzugsweise wellenförmig gestaltet ist.

Gemäß einer zweiten Ausführung zur Lösung der gestellten Aufgabe ist vorgesehen, dass die Rutschkupplung aus zwei einander angrenzenden Hülsen mit einer gemeinsamen Drehachse gebildet ist und dass die einander zugewandten Stirnflächen der Hülsen mit form- und/oder kraftschlüssig ineinander greifenden Stirnverzahnungen versehen sind.

Sofern die Stirnverzahnungen ausschließlich formschlüssig ineinander greifen, sind sie querschnittsmäßig so ausgelegt, dass bis zum Erreichen des zulässigen Drehmomentes dieser Formschluss erhalten bleibt, während beim Überschreiten des zulässigen Drehmomentes eine der Hülsen eine Relativbewegung gegenüber der anderen Hülse ausführen kann. Auch bei einem ausschließlichen Formschluss wird erreicht, dass selbst beim mehrmaligen Überschreiten des zulässigen Drehmomentes die Funktion der Hülse noch gewährleistet ist. Diese Ausführung bietet den Vorteil gegenüber der ersten Ausführung, dass auf die elastische Verformung einer Hülse verzichtet werden kann.

In konstruktiv einfacher Weise bestehen die Stirnverzahnungen der beiden Hülsen aus wechselweise angeordneten Zähnen und Zahnlücken, wobei die Zähne einer Hülse in die Zahnlücken der anderen Hülse eingreifen. Dabei ist dann besonders vorteilhaft, wenn die Zähne jeder Hülse trapezförmig gestaltet sind, wobei sich die Zähne zur freien Stirnfläche hin verjüngen. Die Zahnlücken sind demzufolge umgekehrt trapezförmig gestaltet. Die Zähne sollten spielfrei in die Zahnlücken eingreifen, damit es nicht zu Klappergeräuschen kommt.

Bei der zuvor beschriebenen Stirnverzahnung ist es vorteilhaft, wenn zumindest eine Hülse, vorzugsweise die der Nachstelleinrichtung zugewandt liegende Hülse, mittels eines Kraftspeichers, beispielsweise einer Druckfeder belastet ist. Die relative Drehbewegung einer Hülse gegenüber der anderen wird dadurch erleichtert. Sofern jedoch auf einen Kraftspeicher bzw. auf eine Druckfeder verzichtet werden soll, könnte jede Stirnverzahnung sägezahnförmig gestaltet sein. Die Verwendung einer Druckfeder bietet den Vorteil, dass bei den in Rede stehenden Fahrzeugbremsen ohnehin die vorhandene Druckfeder benutzt wird, so dass sie eine Doppelfunktion ausführt. In besonders vorteilhafter Weise ist auch vorgesehen, dass zwischen der Nachstelleinrichtung und den form- und/oder kraftschlüssig ineinander greifenden Hülsen mindestens eine Kugelumlaufscheibe angeordnet ist. Diese könnte in Verbindung mit den Kugeln so ausgelegt sein, dass sie erst dann eine Relativbewegung ausführt, wenn entweder das zulässige Drehmoment überschritten ist, oder wenn ein Drehmoment überschritten wird, welches unter dem zulässigen Drehmoment liegt.

Unabhängig von der jeweiligen Ausführung werden an der Innenhülse oder von einer der mit einer Stirnverzahnung versehenen Hülse die Drehbewegungen auf eine Welle übertragen, die zu der Nachstelleinrichtung führt. Dabei ist die Auslegung so getroffen, dass maximal das zulässige Drehmoment auf die Innenmechanik der Nachstelleinrichtung übertragen wird.

Anhand der beiliegenden Zeichnungen wird die Erfindung noch näher erläutert.

Es zeigen:
- Figur 1: die Rutschkupplung der erfindungsgemäßen Fahrzeugbremse in einer Stirnansicht und
- Figur 2: die Rutschkupplung gemäß der Figur 1 in einer perspektivischen Darstellung, im teilweise aufgeschnittenen Zustand
- Figur 3: ein vergrößertes Detail einer Zuspanneinrichtung der erfindungsgemäßen Fahrzeugbremse, die als Scheibenbremse ausgebildet ist
- Figur 4: den die Rutschkupplung aufweisenden Bereich der Fahrzeugbremse einer zweiten Ausführung
- Figuren 5 und 6: die beiden mit einer Stirnverzahnung versehenen Hülsen in perspektivischer Darstellung und
- Figuren 7 und 8: den die Rutschkupplung der Fahrzeugbremse aufweisenden Bereich in zwei weiteren Ausführungen in Schnittdarstellung.

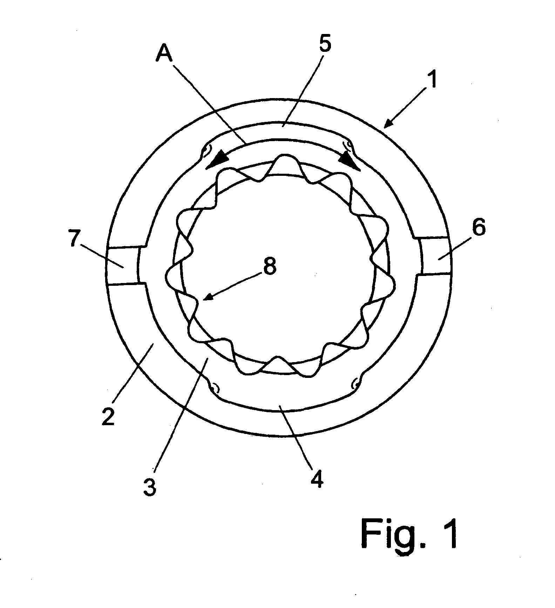

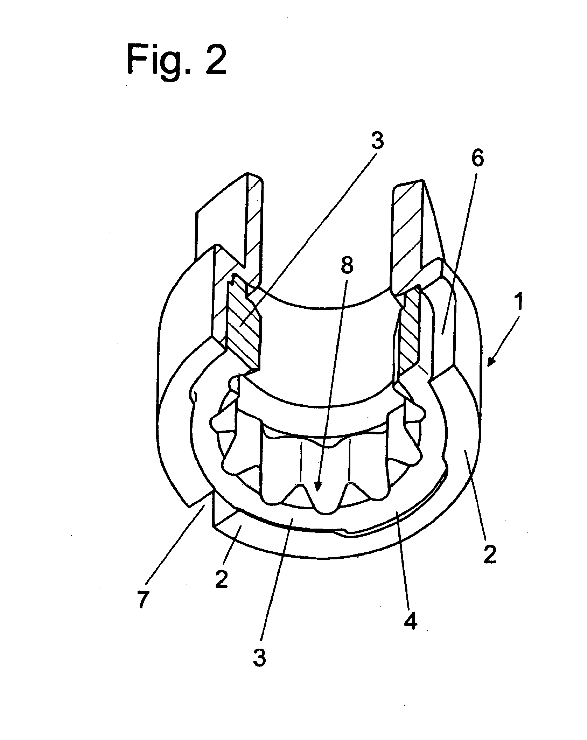

Aus Gründen einer vereinfachten Darstellung ist die Fahrzeugbremse als Ganzes nicht dargestellt. Die innere Mechanik der Nachstelleinrichtung ist ebenfalls nicht dargestellt. Die der Nachstelleinrichtung zugeordnete Rutschkupplung ist in den Figuren 1 und 2 als Einzelheit dargestellt. Danach besteht die Rutschkupplung 1 aus einer Außenhülse 2 und einer formschlüssig damit verbundenen Innenhülse 3. Zur formschlüssigen Verbindung der Außenhülse 2 mit der Innenhülse 3 ist im dargestellten Ausführungsbeispiel die Innenhülse 3 mit zwei einander diametral gegenüberliegenden und segmentartig gestalteten Profilierungen 4, 5 versehen, die sich über einen bestimmten Winkelbereich erstrecken und schließend in komplementäre Einziehungen der Außenhülse 2 eingreifen. Diese segmentartigen Profilierungen 4, 5 sind so ausgelegt, dass sich beim Überschreiten eines zulässigen Drehmomentes die Außenhülse 2 elastisch verformt und sich gegenüber der Innenhülse 3 verdreht. Um diese elastische Verformung zu begünstigen, ist die Außenhülse 2 noch mit zwei Längsnuten 6, 7 versehen, die ebenfalls einander diametral gegenüberliegen und mittig bzw. in gleichen Winkelabständen zu den segmentartigen Profilierungen 4, 5 stehen. Wie insbesondere die Figur 2 zeigt, ist die Länge der Innenhülse 3 geringer als die der Außenhülse 2, die im Längsschnitt stufenförmig ausgebildet ist. Im Bereich des größeren Durchmessers ist die Innenhülse 3 darin eingesetzt. Die Verdrehbarkeit der Außenhülse 2 gegenüber der Innenhülse 3 ist in der Figur 1 durch den Pfeil A dargestellt. Die Figur 2 zeigt außerdem, dass sich die Längsnuten 6, 7 im wesentlichen über den Bereich mit dem größeren Durchmesser der Außenhülse 2 bzw. über den Bereich der eingesetzten Innenhülse 3 erstrecken. Die Figuren 1 und 2 zeigen ferner, dass die Innenfläche der Innenhülse 3 ebenfalls profiliert ist. Im dargestellten Ausführungsbeispiel ist diese Profilierung im Verlauf der Kontur wellenförmig gestaltet.

Besonders beim Wechseln der Bremsbeläge kann es zum Überschreiten des zulässigen Drehmomentes kommen. Die Außenhülse 2 verdreht sich dann zunächst gegenüber der Innenhülse 3 um einen Winkel von 180°, so dass danach wieder ein Formschluss besteht. Beim weiteren Einwirken des Drehmomentes kann dann eine weitere Drehung erfolgen.

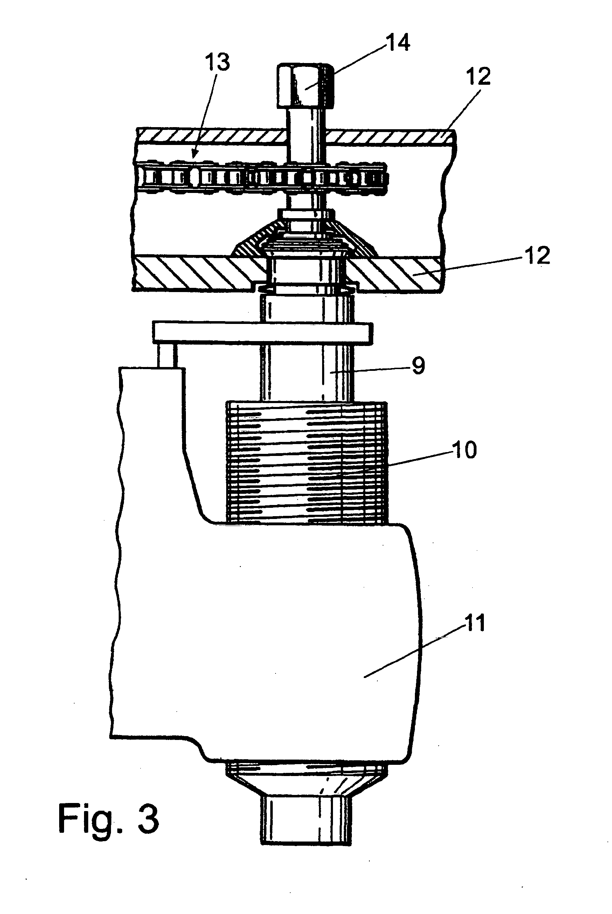

Die Figur 3 zeigt die rechte Seite einer zweispindeligen Zuspannvorrichtung. Diese umfasst eine Nachstelleinrichtung 9, eine Stellspindel 10, eine Traverse 11 und einen Bremssattel 12. Die Stellspindeln 10 sind über eine Synchronisationseinrichtung, im dargestellten Ausführungsbeispiel ein Kettentrieb 13 miteinander zwangsgekoppelt. Das Ende der Stellspindel 12 ist mit einem aufgesetzten Sechskantkopf 14 oder mit einem angeformten Sechskantkopf oder mit einem entsprechend anders geformten Kopf ausgestattet. Die komplette Bremse ist beispielsweise in der EP 0 566 008 A1 beschrieben. Die Rutschkupplung zur Verhinderung eines Bruchs von Teilen der Zuspannvorrichtung wird funktionell dem Bereich zwischen dem Sechskantkopf 14 und der Stellspindel 10 zugeordnet.

Es ergibt sich, dass mehrmals das zulässige Drehmoment überschritten werden kann, ohne dass es zu einer Beschädigung oder Zerstörung der Außenhülse 2 oder der Innenhülse 3 kommt.

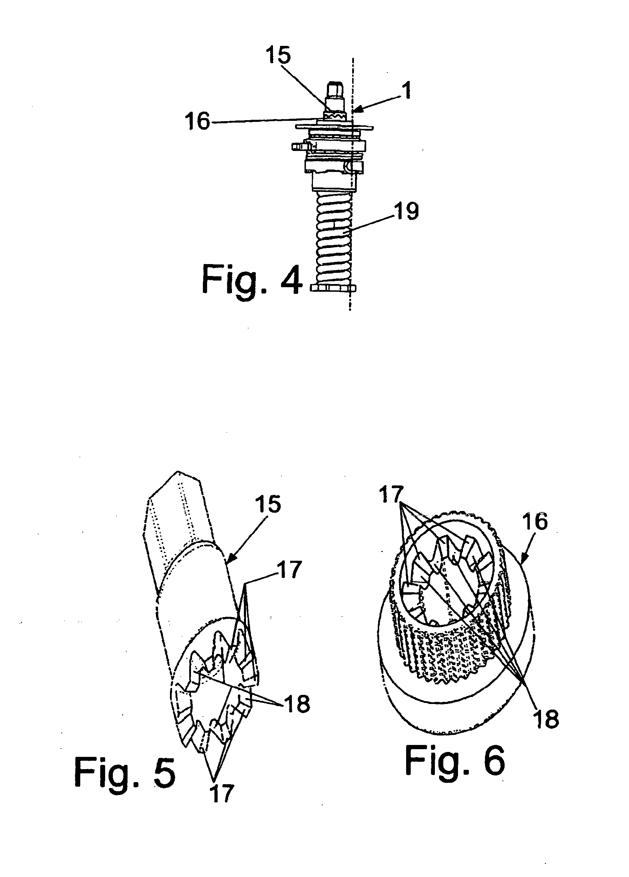

Bei dem zweiten Ausführungsbeispiel gemäß den Figuren 4 bis 6 besteht die Rutschkupplung 1 aus zwei Hülsen 15, 16, die in axialer Richtung nebeneinander angeordnet sind bzw. deren Mittellängsachsen bzw. Drehachsen fluchtend zueinander angeordnet sind. Die einander zugewandt liegenden Stirnflächen der Hülsen 15, 16 sind mit Stirnverzahnungen versehen, die aus Zähnen 17 und Zahnlücken 18 gebildet sind, die bei beiden Hülsen 15, 16 im ständigen Wechsel angeordnet sind. Wie die Figuren 5 und 6 zeigen, sind die Zähne 17 trapezförmig gestaltet, und die Zahnlücken 18 sind ebenfalls trapezförmig ausgebildet, jedoch spiegelbildlich angeordnet, so dass die Zähne 17 schließend in die Zahnlücken 18 eingreifen. Wie die Figur 4 zeigt, ist die der nicht dargestellten Nachstelleinrichtung zugewandt liegende Hülse 16 durch einen Kraftspeicher in Form einer Druckfeder 19 belastet. Damit wird eine Verdrehung der Hülse 15 im Falle des Überschreitens des zulässigen Drehmomentes gegenüber der Hülse 16 erleichtert, da sich die Hülse 16 in Richtung zur Nachstelleinrichtung verschieben kann.

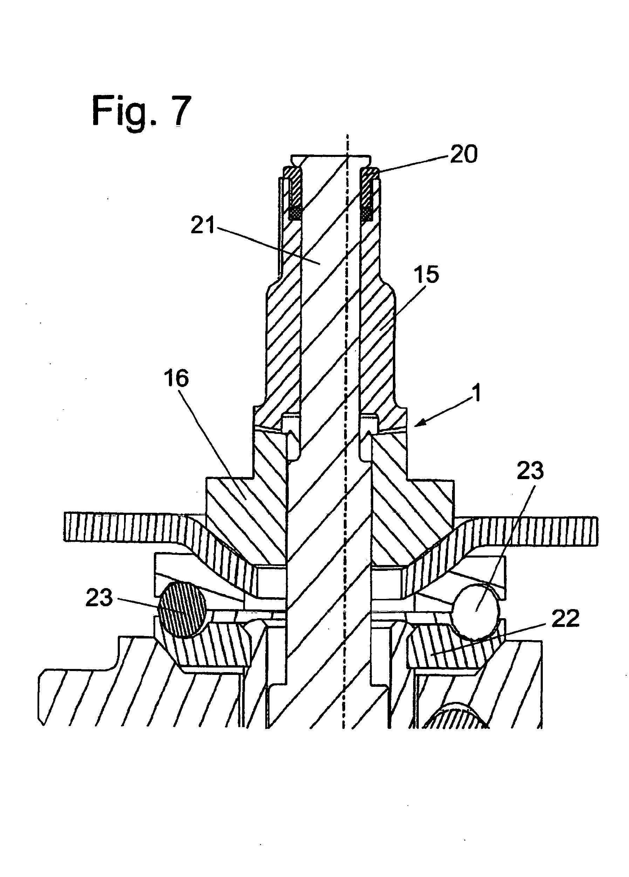

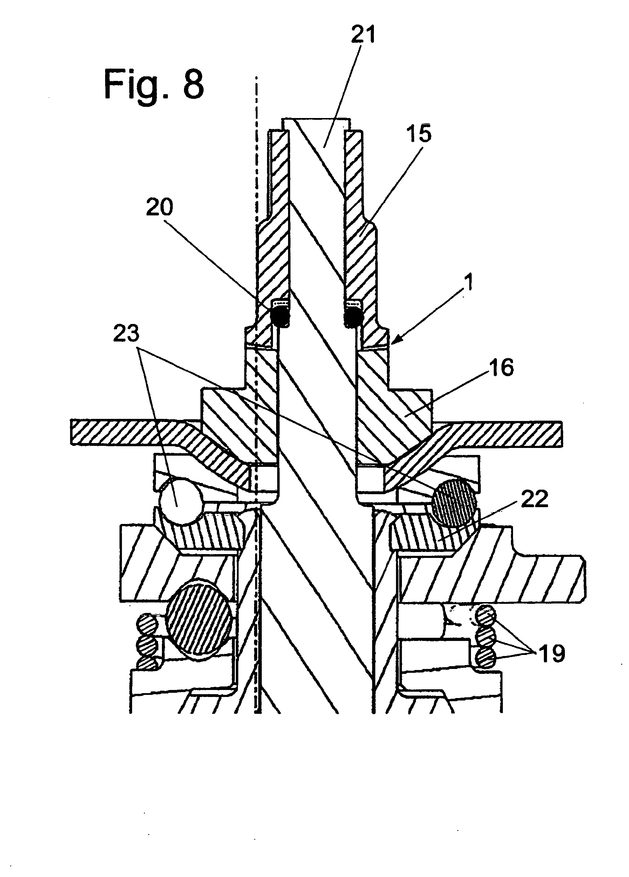

Die Figuren 7 und 8 zeigen den Bereich der Rutschkupplung 1 in einer Vergrößerung. Wie die Figuren zeigen, ist in die der Nachstelleinrichtung abgewandt liegende Hülse 15 eine Dichtung 20 eingesetzt. Bei der Ausführung nach der Figur 7 liegt diese Dichtung in dem der Stirnverzahnung abgewandten Bereich, während sie bei der Ausführung nach der Figur 8 angrenzend an die Stirnverzahnung angeordnet ist. Dazu ist die Hülse 15 mit einer Aufdrehung versehen und die Welle 21 ist stufenförmig vergrößert.

Bei den Ausführungen gemäß den Figuren 7 und 8 ist zwischen der Rutschkupplung 1 und der die Hülse 16 belastenden Druckfeder 19 noch eine Kugelumlaufscheibe 22 angeordnet, die Führungen für die Kugeln 23 aufweist.

## Patentansprüche

1. Fahrzeugbremse, insbesondere Scheiben- oder Trommelbremse, mit an Bremsbelagträgern festgelegten Bremsbelägen, mit einer den Verschleiß der Bremsbeläge kompensierenden Nachstelleinrichtung, die mit einer beim Überschreiten eines zulässigen Drehmomentes ansprechenden Rutschkupplung ausgestattet ist, **dadurch gekennzeichnet, dass** die Rutschkupplung (1) aus einer einen zentral durchgehenden Hohlraum aufweisenden Außenhülse (2) und einer Innenhülse (3), beide aus Stahl bestehend, gebildet ist, und dass die Außenfläche der Innenhülse (3) und die Innenfläche der Außenhülse (2) durch Profilierungen derart formschlüssig miteinander verbunden sind, dass die Außenhülse (2) bei Überschreiten des zulässigen Drehmomentes elastisch verformbar ist, wobei die Außenhülse (2), im Längsschnitt gesehen, stufenförmig abgesetzt ist, und die Innenhülse (3) sich im Wesentlichen über den Bereich des größeren Durchmessers der Außenhülse (2) erstreckt.

2. Fahrzeugbremse nach Anspruch 1, **dadurch gekennzeichnet, dass** die Profilierungen der Außenhülse (2) und der Innenhülse (3) segmentartig gestaltet sind und formschlüssig ineinander greifen.

3. Fahrzeugbremse nach Anspruch 2, **dadurch gekennzeichnet, dass** die Innenhülse (3) mit erhabenen, nach außen verspringenden segmentartig gestalteten Profilierungen versehen ist, die mit komplementär gestalteten Einziehungen der Außenhülse (2) in Eingriff stehen.

4. Fahrzeugbremse nach einem oder mehreren der vorstehenden Ansprüche, **dadurch gekennzeichnet, dass** die Innenhülse (3) mit zwei einander diametral gegenüberliegenden segmentartig gestalteten Profilierungen versehen ist, und dass die Außenhülse mit entsprechenden Einziehungen versehen ist.

5. Fahrzeugbremse nach einem oder mehreren der vorstehenden Ansprüche, **dadurch gekennzeichnet, dass** die Außenhülse (2) mit einer der Anzahl der segmentartigen Profilierungen der Innenhülse (3) entsprechenden Stückzahl von Längsnuten (6, 7) versehen ist, die sich im wesentlichen über den Bereich der Innenhülse (3) erstrecken.

6. Fahrzeugbremse nach einem oder mehreren der vorstehenden Ansprüche, **dadurch gekennzeichnet, dass** die Innenfläche der Innenhülse (3) mit einer vorzugsweise wellenförmig verlaufenden Profilierung (8) versehen ist.

7. Fahrzeugbremse, insbesondere Scheiben- oder Trommelbremse mit an Bremsbelagträgern festgelegten Bremsbelägen, mit einer den Verschleiß der Bremsbeläge kompensierenden Nachstelleinrichtung, die mit einer beim Überschreiten eines zulässigen Drehmomentes ansprechenden Rutschkupplung ausgestattet ist, **dadurch gekennzeichnet, dass** die Rutschkupplung (1) aus zwei einander angrenzenden Hülsen (15, 16) mit einer gemeinsamen Drehachse gebildet ist, und dass die einander zugewandten Stirnflächen der Hülsen (15, 16) mit form- und/oder kraftschlüssig ineinander greifenden Stirnverzahnungen (17, 18) versehen sind.

8. Fahrzeugbremse nach Anspruch 7, **dadurch gekennzeichnet, dass** die Stirnverzahnungen aus wechselweise angeordneten Zähnen (17) und Zahnlücken (18) bestehen, wobei die Zähne (17) einer Hülse (15, 16) in die Zahnlücken (18) der anderen Hülse (16, 15) eingreifen.

9. Fahrzeugbremse nach Anspruch 7 oder 8, **dadurch gekennzeichnet, dass** zumindest eine Hülse (15, 16) vorzugsweise die der Nachstelleinrichtung zugewandt liegende Hülse (16) mittels eines Kraftspeichers, beispielsweise einer Druckfeder (19) belastet ist.

10. Fahrzeugbremse nach einem oder mehreren der vorstehenden Ansprüche, **dadurch gekennzeichnet, dass** zwischen der Nachstelleinrichtung und den form- und/oder kraftschlüssig ineinander greifenden Hülsen (15, 16) mindestens eine Kugelumlaufscheibe (22) angeordnet ist.

11. Fahrzeugbremse nach Anspruch 10, **dadurch gekennzeichnet, dass** die mindestens eine Kugelumlaufscheibe (22) durch den der Nachstelleinrichtung zugewandt liegenden Kraftspeicher (19) belastet ist.

## Claims

1. Vehicle brake, in particular disc or drum brake, comprising brake pads/linings fixed to backing plates and an adjusting device which compensates for wear of the brake pads/linings and which is equipped with a slipping clutch responding if a permissible torque is exceeded, **characterised in that** the slipping clutch (1) is represented by an outer sleeve (2) having a central continuous cavity and an inner sleeve (3), both of which are made of steel, and **in that** the outer surface of the inner sleeve (3) and the inner surface of the outer sleeve (2) are positively connected to one another by profiling in such a way that the outer sleeve (2) is elastically deformable if the permissible torque is exceeded, wherein the outer sleeve (2) is stepped if viewed in longitudinal section and the inner sleeve (3) substantially extends over the region of the larger diameter of the outer sleeve (2).

2. Vehicle brake according to claim 1, **characterised in that** the profilings of the outer sleeve (2) and the inner sleeve (3) are designed in the manner of segments and positively engage one another.

3. Vehicle brake according to claim 3, **characterised in that** the inner sleeve (3) has raised segmented profilings which project outwards and which are in engagement with complementary indentations of the outer sleeve (2).

4. Vehicle brake according to one or more of the preceding claims, **characterised in that** the inner sleeve (3) has two segmented profilings arranged diametrically opposite one another and the outer sleeve has corresponding indentations.

5. Vehicle brake according to one or more of the preceding claims, **characterised in that** the outer sleeve (2) has a number of longitudinal grooves (6, 7) matching the number of segmented profilings of the inner sleeve (3), which grooves (6, 7) substantially extend over the region of the inner sleeve (3).

6. Vehicle brake according to one or more of the preceding claims, **characterised in that** the inner surface of the inner sleeve (3) has a profiling (8) which preferable extends in a wavy manner.

7. Vehicle brake, in particular disc or drum brake, comprising brake pads/linings fixed to backing plates and an adjusting device which compensates for wear of the brake pads/linings and which is equipped with a slipping clutch responding if a permissible torque is exceeded, **characterised in that** the slipping clutch (1) is represented by two adjoining sleeves (15, 16) having a common axis of rotation, and **in that** the facing end faces of the sleeves (15, 16) are provided with end toothings (17, 18) which engage one another positively and/or non-positively.

8. Vehicle brake according to claim 7, **characterised in that** the end toothings (17, 18) consist of alternating teeth (17) and tooth spaces (18), the teeth (17) of one sleeve (15, 16) engaging the tooth spaces (18) of the other sleeve (16, 15).

9. Vehicle brake according to claim 7 or 8, **characterised in that** at least one sleeve (15, 16), preferably the sleeve (16) facing the adjusting device, is loaded by an energy storage device, for example a compression spring (19).

10. Vehicle brake according to one or more of the preceding claims, **characterised in that** at least one recirculating ball disc (22) is provided between the adjusting device and the sleeves (15, 16) which engage one another positively and/or non-positively.

11. Vehicle brake according to claim 10, **characterised in that** the at least one recirculating ball disc (22) is loaded by the energy storage device (19) facing the adjusting device.

## Revendications

1. Frein de véhicule, notamment frein à disque ou frein à tambour, comprenant des garnitures de frein fixées à des porte-garnitures de frein, un dispositif de réglage compensant l'usure des garnitures de frein et équipé d'un accouplement à glissement répondant à un dépassement d'un couple de rotation admissible, **caractérisé en ce que** l'accouplement (1) à glissement est formé d'une douille (2) extérieure ayant une cavité traversante centralement et d'une douille (3) intérieure, toutes deux en acier, et **en ce que** la surface extérieure de la douille (3) intérieure et la surface intérieure de la douille (2) extérieure sont reliées l'une à l'autre à complémentarité de forme par des profilages, **en ce que** la douille (2) extérieure est déformable élastiquement, lorsque le couple de rotation admissible est dépassé, la douille (2) extérieure étant décalée en forme d'étage, considéré en coupe longitudinale, et la douille (3) intérieure s'étendant sensiblement sur la zone du diamètre le plus grand de la douille (2) extérieure.

2. Frein de véhicule suivant la revendication 1, **caractérisé en ce que** les profilages de la douille (2) extérieure et de la douille (3) intérieure sont conformés en segments et s'interpénètrent à complémentarité de forme.

3. Frein de véhicule suivant la revendication 2, **caractérisé en ce que** la douille (3) intérieure est pourvue de profilages bosselés en saillie vers l'extérieur du type en segment, qui sont en prise avec des retraits conformés de manière complémentaire de la douille (2) extérieure.

4. Frein de véhicule suivant l'une ou plusieurs des revendications précédentes, **caractérisé en ce que** la douille (3) intérieure est pourvue de deux profilages conformés en segments opposés diamétralement l'un à l'autre et **en ce que** la douille extérieure est pourvue de retraits correspondants.

5. Frein de véhicule suivant l'une ou plusieurs des revendications précédentes, **caractérisé en ce que** la douille (2) extérieure est pourvue de rainures (6, 7) longitudinales en un nombre de pièces correspondant au nombre des profilages de type en segment de la douille (3) intérieure, les rainures s'étendant sensiblement sur la partie de la douille (3) intérieure.

6. Frein de véhicule suivant l'une ou plusieurs des revendications précédentes, **caractérisé en ce que** la surface intérieure de la douille (3) intérieure est pourvue d'un profilage (8) s'étendant, de préférence, de manière ondulée.

7. Frein de véhicule, notamment frein à disque ou frein à tambour, comprenant des garnitures de frein fixées à des porte-garnitures de frein, un dispositif de réglage compensant l'usure des garnitures de frein et équipé d'un accouplement à glissement répondant à un dépassement d'un couple de rotation admissible, **caractérisé en ce que** l'accouplement (1) à glissement est formé de deux douilles (15, 16) voisines l'une de l'autre et ayant un axe de rotation commun et **en ce que** les surfaces frontales tournées l'une vers l'autre des douilles (15, 16) sont pourvues de dentures (17, 18) cylindriques engrenant l'une dans l'autre à complémentarité de forme et/ou de force.

8. Frein de véhicule suivant la revendication 7, **caractérisé en ce que** les dentures cylindriques sont constituées de dents (17) disposées en alternance et d'intervalles (18) entre les dents, les dents (17) d'une douille (15, 16) engrenant dans les intervalles (18) entre les dents de l'autre douille (16, 15).

9. Frein de véhicule suivant la revendication 7 ou 8, **caractérisé en ce qu'**au moins une douille (15, 16), de préférence la douille (16) tournée vers le dispositif de réglage, est soumise à l'action d'au moins un accumulateur de force, par exemple à l'action d'un ressort (19) de compression.

10. Frein de véhicule suivant l'une ou plusieurs des revendications précédentes, **caractérisé en ce qu'**au moins une rondelle (22) de circulation de billes est montée entre le dispositif de réglage et les douilles (15, 16) engrenant l'une dans l'autre à complémentarité de forme et/ou de force.

11. Frein de véhicule suivant la revendication 10, **caractérisé en ce que** la au moins une rondelle (22) à circulation de billes est soumise à l'action d'un accumulateur (19) de force tourné vers le dispositif de réglage.
